# EUROPEAN PATENT SPECIFICATION

(11) **EP 4 304 429 B1**
(45) Date of publication and mention of the grant of the patent: **25.12.2024**
(21) Application number: 22711982.3
(22) Date of filing: 10.03.2022
(51) Int. Cl.: A47J 31/52

(54) **COFFEE MACHINE WITH MILK DISPENSING DEVICE AND RELATIVE METHOD FOR CONTROLLING A CURRENT MILK DISPENSING CYCLE**
KAFFEEMASCHINE MIT MILCHABGABEVORRICHTUNG UND ZUGEHÖRIGES VERFAHREN ZUR STEUERUNG EINES AKTUELLEN MILCHABGABEZYKLUS
MACHINE À CAFÉ DOTÉE D'UN DISPOSITIF DE DISTRIBUTION DE LAIT ET PROCÉDÉ ASSOCIÉ POUR COMMANDER UN CYCLE DE DISTRIBUTION DE LAIT EN COURS

(30) Priority: 13.04.2021 IT 202100009230
(43) Date of publication of application: 17.01.2024
(73) Proprietor: De'Longhi Appliances S.r.l., 31100 Treviso (IT)
(72) Inventor: ROSETTA, Simone, 31100 Treviso (IT); PANCIERA, Antonio, 31100 Treviso (IT); LENA, Antonio, 31100 Treviso (IT); GENNA, Gabriele, 31100 Treviso (IT); TREVISAN, Gianpaolo, 31100 Treviso (IT)
(74) Representative: Rapisardi, Mariacristina
(86) International application number: PCT/EP2022/056161
(87) International publication number: WO 2022/218618

(56) References cited:
- EP-A1- 3 162 257
- EP-A2- 2 020 198
- US-A1- 2004 183 693

## Description

The present invention relates to a coffee machine with a milk dispensing device and to the relative method for controlling a current milk dispensing cycle.

As it is well known, there are currently many types of coffee machines on the market provided with, besides the traditional coffee dispenser, also a device for emulsifying and/or heating milk. Normally in these machines the milk dispensing device comprises a jug containing the milk and a lid closing the jug having a Venturi-effect chamber capable of drawing the milk present in the jug through a steam flow suitably generated by the boiler of the coffee machine.

In some cases, an infrared optical means is provided to detect the level of milk present in the jug, with which the milk dispensing cycle is controlled, which is extended until the jug is completely emptied so as not to leave any milk residues inside.

If the jug is completely emptied, the boiler must be stopped before the end of the dispensing cycle to avoid the creation of puffs of steam that are potentially dangerous for the user. However, it is generally rather complicated to have a precise control of the milk dispensing cycle since milk dispensing can depend on various factors, at the same temperature, pressure and flow of the steam.

These factors, in addition to the temperature of the milk, also include the type of milk used, which can be of various origins, for example animal or vegetable, such as cow's milk, sheep's milk, soy milk, almond milk, etc.

EP 3 162 257 A1 discloses a coffee machine comprising a steam dispenser and dispending device for dispending milk emulsified in a jug, and an optical means to detect the level of milk present in the jug.

The technical task of the present invention is to eliminate the above-mentioned drawbacks of the prior art. Within the scope of this technical task, an object of the invention is to design a coffee machine with a device for emulsifying and heating the milk which allows the milk dispensing cycle automatically to be adapted in a versatile manner so that the jug is emptied.

Within the scope of this technical task, another object of the invention is to devise a coffee machine which allows to automatically adapt a milk dispensing cycle to avoid an incorrect operation of the device for emulsifying and heating the milk.

This task is achieved by a coffee machine comprising a machine body, an electronic controller, a water feed pump, a boiler for producing steam from said water, a water steam dispenser provided with a shut-off solenoid valve, a dispensing device for dispensing milk emulsified and/or heated with said water steam, said device having a jug containing the milk and a lid closing the jug having a Venturi effect chamber connected to said steam dispenser and to said jug for drawing the milk present in said jug, an optical means being further provided to detect the level of milk present in said jug comprising at least a first operative infrared optical means for detecting at least around a first level of milk in said jug, characterized in that said controller is configured to: store a nominal value of a transition time of said signal from a first to a second threshold preset around said first level and a nominal value of a first delay between an instant of deactivation of said boiler and an instant of detection of said first level of milk;
during the execution of a current milk dispensing cycle, acquire a current value of said transition time;
execute said current milk dispensing cycle with a current value of said first delay that is modified with respect to said nominal value of said first delay if said current transition time differs from said nominal transition time.

In a preferred embodiment of the invention, the electronic controller is configured to increase or respectively decrease in the current milk dispensing cycle said current value of said first delay with respect to the corresponding nominal value if said current transition time is greater or respectively lower than said nominal transition time.

In a preferred embodiment of the invention, said electronic controller is configured to execute said current dispensing cycle with a current value of a second delay between an instant of deactivation of said pump and said instant of detection of said first level of milk, wherein said current value of said second delay unequivocally derives from said current value of said first delay.

In a preferred embodiment of the invention, said optical means for detecting the level of milk present in said jug comprises at least second operative infrared optical means for detecting at least around a second level of milk, where said second level is lower than said first level.

In a preferred embodiment of the invention, said electronic controller is configured to execute said current dispensing cycle with a current value of a third delay between the instant of closure of said solenoid valve and the instant of detection of said second level of milk, wherein said current value of said third delay unequivocally derives from said current value of said first delay. In a preferred embodiment of the invention, said first optical means comprises a first transmitter IR and a first receiver IR positioned at said first level, and said second optical means comprises a second transmitter IR and a second receiver IR positioned at said second level.

In a preferred embodiment of the invention, said second optical means is arranged near the bottom of said jug.

In a preferred embodiment of the invention, the electronic controller excludes the aforesaid control over the current dispensing cycle if said first level is not detected within a certain interval of time starting from an instant of opening of said solenoid valve.

In this case the current dispensing cycle for the execution of a recipe will be executed following the predefined settings for the recipe being executed where the instant of switching off the pump and boiler and the instant of closure of the solenoid valve are predefined.

The present invention also discloses a method for controlling the milk dispensing cycle with this coffee machine.

In practice, during the execution of a current milk dispensing cycle, the machine is able to automatically reset the delays by modifying them with respect to the nominal delays.

It has in fact been found that a certain correlation exists between the type of milk used and the signal acquired by the first detection means around the first level of milk.

The signal acquired depends on the specific chemical/physical properties of the milk used, due for example to its origin (animal or vegetable), and with a milk having the same origin it depends on temperature, fat content in the milk, etc.

Advantageously, this determined correlation has been exploited to adapt the execution of the current milk dispensing cycle.

The result is that, if the jug has been loaded with a quantity of milk substantially correct for the selected recipe, almost the entire content of the jug is dispensed in accordance with the selected recipe regardless of the type of milk used and without generating puffs of steam.

Further characteristics and advantages of the invention will more fully emerge from the description of a preferred but not exclusive embodiment of a coffee machine with a device for emulsifying and heating the milk, illustrated by way of non-limiting example in the accompanying drawings, in which:

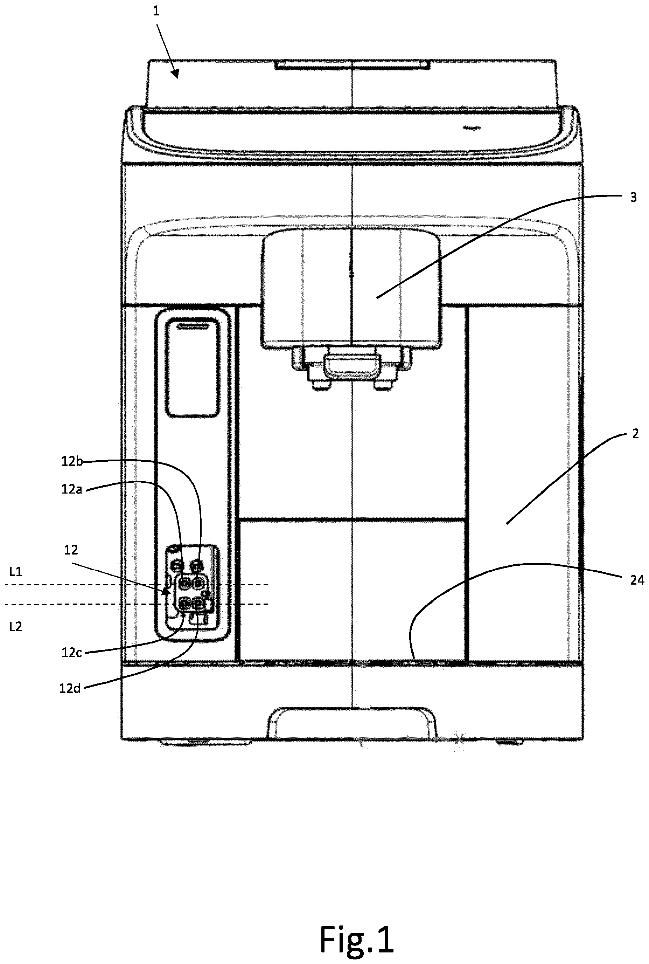

fig. 1 is a front view of the coffee machine without a device for emulsifying and heating the milk;

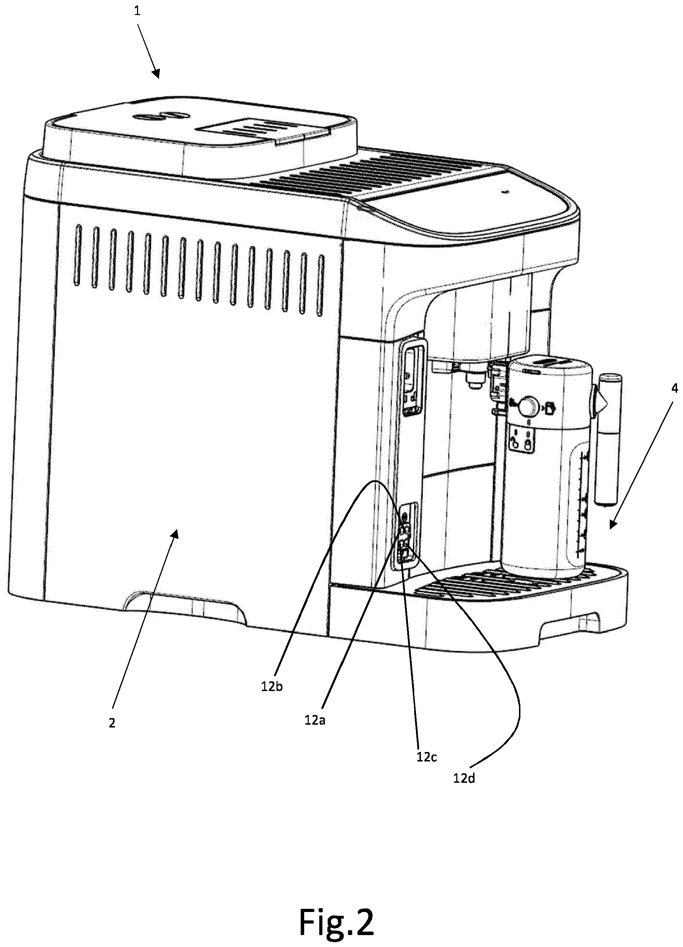

fig. 2 is a perspective view of the coffee machine with a device for emulsifying and heating the milk disconnected from the machine body;

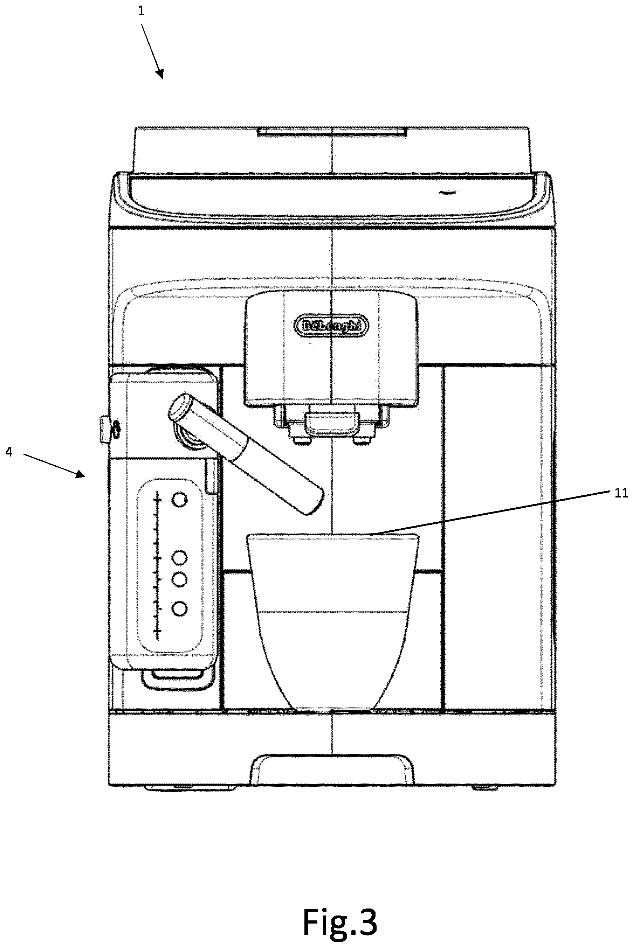

fig. 3 is a front view of the coffee machine with a device for emulsifying and heating the milk connected from the machine body;

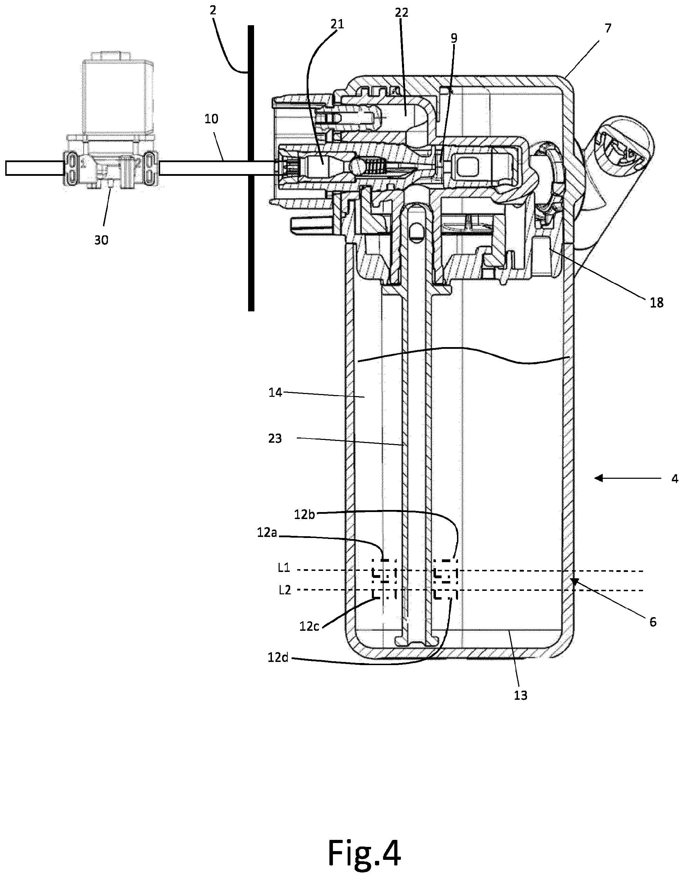

fig. 4 is a sectional side elevation view of the device for emulsifying and heating the milk connected to the external steam dispenser of the coffee machine;
fig. 5 the trend over time of the signal acquired by the first optical detection means, illustrated in dotted line, and of the signal acquired by the second optical detection means, illustrated in dashed line;
figure 6 shows the trend in the interval of time F1 of the signal acquired by the first optical detection means for three different types of milk present in the jug;
fig. 7 shows a diagram of the milk dispensing cycle based on the control operated by the optical detection means;
fig. 8 shows the trend of the signal (inverted for ease of view) acquired by the first optical detection means for three different types of milk present in the jug, and in particular it shows the transition time of the signal from a first to a second threshold preset around the first level of milk;

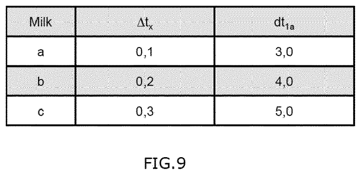

fig. 9 shows a simplified table for determining the type of milk present in the jug.

With particular reference to the figures described above, the coffee machine with a device for emulsifying and heating the milk is indicated as a whole with the number 1.

The coffee machine 1 comprises a machine body 2 having on the same face a coffee dispenser 3 and a device 4 for emulsifying and/or heating the milk.

Inside the coffee machine 1, in a known way, an electronic controller (not shown) is provided, to which a water feed pump (not shown), a boiler for producing steam from the water (not shown) fed by the pump, and an external dispenser 10 of the flow of steam produced by the boiler provided with a shut-off solenoid valve 30 are connected.

The device 4 has a jug 6 containing the milk 14 and a lid 7 for the closure thereof.

For reasons that will become clearer in the following, the jug 6 is made of transparent material.

Inside the lid there is a Venturi-effect chamber 9 to which a duct 21 for the removable connection to the steam dispenser 10, an air suction duct 22 possibly provided with an adjustable opening shut-off valve, a suction duct 23 for sucking the milk present in the jug 6 and a duct 18 for dispensing the heated and/or emulsified milk are connected.

The device 4 is removably associated with the machine 1 in a cantilevered position with respect to the machine body 2 in such a way that the jug 6 remains at a distance from the rest surface 24 of the machine on which the cups or other containers are normally positioned.

In particular, at least one cup 11 for collecting the coffee and/or the emulsified and/or heated milk can be placed on the rest surface 24.

In the machine body 2, an optical means 12 is provided to detect the level of the milk present in the jug 6.

The optical detection means comprises at least a first infrared optical means 12a, 12b, in particular a first transmitter IR and a first receiver IR, which are operative for detecting the level of milk present in the jug 6 at least around a first level L1 of milk.

The optical detection means 12 preferably also comprises a second infrared optical means 12c, 12d, in particular a second transmitter IR and a second receiver IR, which are operative for detecting the level of the milk present in the jug at least around a second level L2 that is lower than the first level L1.

The second level of milk L2 is near the bottom 13 of the jug 6.

In particular, the detection means 12 is placed on the body 2 of the machine 1 also spaced from the rest surface 24 so as to face the lower area of the jug 6.

Advantageously, the electronic controller is configured to store a nominal value of a transition time of the signal from a first threshold S1 to a second threshold S2 preset around the first level L1, and a nominal value of a first delay between an instant of deactivation of the boiler and an instant of detection of the first level of milk L1.

The electronic controller is also configured to acquire a current value of the transition time Δtₓ of the signal from the first threshold S1 to the second threshold S2 during the execution of a current milk dispensing cycle, where x = a, b, c, etc., and "a", "b", "c", etc. identify the type of milk used.

To execute the recipe selected by the user, the electronic controller executes the current milk dispensing cycle with a current value of dt₁ₐ of the first delay that is modified with respect to the corresponding nominal value if the current transition time of the signal from the first threshold S1 to the second threshold S2 differs from the nominal transition time.

The electronic controller is configured to increase or respectively decrease the current value in the current milk dispensing cycle the current value dt₁ₐ of the first delay with respect to the corresponding nominal value if the current transition time of the signal from the first threshold S1 to the second threshold S2 is higher or respectively lower than the nominal transition time. The electronic controller is also configured to execute the current dispensing cycle with a current value dt_{1b} of a second delay between an instant of deactivation of the pump and the instant of detection of the first level of milk L1, wherein the current value dt_{1b} of the second delay unequivocally derives from the current value dt₁ₐ of the first delay.

Furthermore, the electronic controller is configured to execute the current dispensing cycle with a current value dt₂ of a third delay between the instant of closure of the solenoid valve 30 and the instant t₂ of detection of the second level L2 of milk, wherein the current value dt₂ of the third delay unequivocally derives from the current value dt₁ₐ of said first delay.

If the first level L1 is not detected within a certain interval of time starting from the instant of opening of the solenoid valve 30, then during the execution of the current dispensing cycle the controller disables the aforesaid control of the current dispensing cycle and replaces it with a preset one.

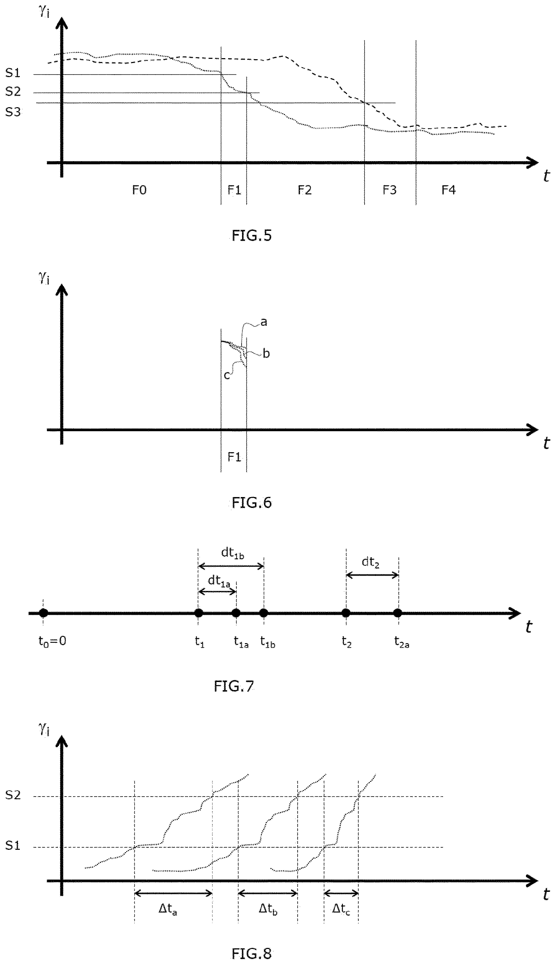

A simplifying case of how a current milk dispensing cycle is executed is illustrated with the aid of figures 5 to 8.

The user loads into the jug a quantity of milk substantially corresponding to that required by the recipe to be executed, marked by a reference notch on the jug 6.

In any case, the quantity of milk loaded must exceed a minimum level, also indicated by a notch on the jug 6, higher than L1.

The recipe can be milk alone for latte macchiato, milk alone for cappuccino, double milk, etc. The user has chosen a specific type of milk, for example cow's milk or soy milk or almond milk, which we indicate with "a".

The user controls the execution of the recipe from the dashboard of the coffee machine.

After having activated the pump and the boiler, the electronic controller commands the opening of the solenoid valve 30 at time t₀=0 and milk dispensing thus begins.

During dispensing, the level of milk in the jug drops approaching level L1.

The first infrared optical means 12a, 12b sends the signal detected around the level L1 to the electronic controller.

The electronic controller processes the acquired signal and calculates the time Δtₐ which uses the signal to pass from the first threshold S1 to the second threshold S2.

The value Δtₐ, which corresponds to the type of milk "a" present in the jug 6, is used to possibly correct the nominal value of the first delay for switching off the boiler: the electronic controller sets a current value dt₁ₐ of the first delay different from the nominal value of the first delay if Δtₐ is different from the nominal transition time.

A mathematical function will be able to unequivocally define the extent of the correction.

Being ti defined as the instant in which the level L1 of milk in the jug 6 is detected, in the interval of time between t ₀ and t ₁ the solenoid valve 30 is open, the pump and the boiler are switched on.

Being t₁ₐ = t₁ + dt₁ₐ defined, it follows that between t₁ and t₁ₐ the current dispensing cycle is executed with the boiler switched on, the pump switched on and obviously the solenoid valve 30 open.

At instant t₁ₐ the boiler switches off and thus begins the reduction of steam production.

The electronic controller automatically also sets a current value dt_{1b} of the second delay for switching off the pump and a current value dt₂ of the third delay for the closure of the solenoid valve.

The current value of the second delay dt_{1b} and the third delay dt₂ can be calculated with a mathematical function that unequivocally links them to the current value of the first delay dt₁ₐ. For example dt_{1b} can be equal to double dt₁ₐ.

Being t_{1b} = t₁ + dt_{1b} defined, it follows that in the interval of time between t₁ₐ and t_{1b} the current dispensing cycle is executed with the boiler switched off and the pump switched on, while from time t_{1b} the current dispensing cycle continues even with the pump switched off, obviously the solenoid valve 30 remaining open.

As the current dispensing cycle continues, the level of milk in the jug drops further, approaching level L2.

Being t₂ defined as the instant in which the level L2 of milk in the jug 6 is detected, in the interval of time between t_{1b} and t₂ the solenoid valve 30 is still open, while the pump and the boiler are switched off.

Being t₂ₐ = t₂ + dt₂ defined, it follows that the solenoid valve 30 remains open continuously until the instant t₂ₐ in which it finally closes.

At instant t₂ₐ the current milk dispensing cycle ends, which corresponds to a complete emptying of the jug 6.

If the user had loaded the type of milk "b" or "c" into the jug 6 for the execution of the same recipe, the electronic controller would have computed a time Δtb or Δtc the signal takes to pass from the first threshold S1 to the second threshold S2 and would have corrected in a different way the nominal value of the first delay for switching off the boiler and consequently the second and third delay.

Figure 5 illustrates the trend over time of the signal acquired by the detection means 12 for the current dispensing cycle just described where the type of milk "a" is used.

F0 indicates the interval of time in which the signal, in particular that acquired by the first pair of sensors 12a, 12b, remains above the threshold S1 and the level of milk is above L1; F1 indicates the interval of time, following F0, in which the signal is between the threshold S1 and the threshold S2, and the level of milk is around the level L1; F2 indicates the interval of time, following F1, in which the signal passes below the threshold S2, and the level of milk is comprised between L1 and L2; F3 indicates the interval of time, following F2, in which the signal, in particular that acquired by the second pair of sensors 12c, 12d, is below the threshold S3 and the level of milk is around the level L2; and F4 indicates the interval of time, following F3, in which the signal is below the threshold S3 and the level of milk is below the level L2. The control of the current dispensing cycle thus executed allows the jug to be emptied almost completely, interrupting dispensing without creating unwanted puffs of steam when the quantity of milk loaded into the jug is equal to or even less than the nominal quantity of milk dispensed associated with the nominal dispensing cycle.

Finally, the electronic controller is configured to disable in certain circumstances the aforesaid control of the current dispensing cycle and execute the same recipe following predefined and dedicated settings for each recipe: in particular, the electronic controller has also stored, for each recipe, a reference time for switching off the pump and the boiler and for the closure of the solenoid valve 30 starting from the instant in which the solenoid valve 30 is opened.

The execution of the recipe with this predefined setting takes place if the user has loaded much more milk than that required by the recipe into the jug.

To assist the user in this regard, the jug 6, as shown in the figures and as already mentioned, can be provided with one or more reference notches for the correct filling of the jug according to the selected recipe.

The electronic controller therefore, if it ascertains that the reference time for switching off the boiler has elapsed without having reached level L1 yet, then it disables the corrections of the nominal delays provided for by the instant of detection of the levels L1 and L2 and enables the control with predefined settings.

In these circumstances, since there is no risk of puffs of steam due to the large quantity of milk available compared to that required to execute the recipe, the intervention of the detection system IR is not necessary. In fact, in any case, some milk will remain in the jug at the end of the current dispensing cycle.

If the level of milk loaded by the user is substantially correct, the intervention of the detection system IR is necessary, with the result that for the same recipe the quantity of milk dispensed may vary depending on the type of milk used but an almost complete emptying of the jug without puffs of steam will always be guaranteed.

It should be noted that the upper sensors IR and the lower sensors IR can work in combination or selectively, to improve the resolution of the signal.

For example, at the interval F1 it is preferable that only the upper sensors IR 12a, 12b are active so that the electronic controller can process a signal taken with a higher sampling frequency.

In practice, the materials used, as well as the dimensions, can be any according to the needs and the state of the art.

## Claims

1. A coffee machine (1) comprising a machine body (2), an electronic controller, a water feed pump, a boiler for producing steam from said water, a steam dispenser (10) provided with a shut-off solenoid valve (30), a dispensing device (4) for dispensing milk emulsified and/or heated with said steam, said device (4) having a jug (6) containing the milk and a lid (7) closing the jug (6) having a Venturi effect chamber (9) connected to said steam dispenser (10) and to said jug (6) for drawing the milk present in said jug (6), an optical means (12) being further provided to detect the level of milk (14) present in said jug (6) comprising at least a first operative infrared optical means (12a, 12b) to acquire a signal at least around a first level (L1) of milk in said jug (6), **characterized in that** said controller is configured to:
- store a nominal value of a transition time of said signal from a first threshold to a second threshold (S1, S2) preset around said first level (L1), and a nominal value of a first delay between an instant of deactivation of said boiler and an instant of detection of said first level of milk (L1);
- during the execution of a current milk dispensing cycle, acquire a current value (Δtₓ) of said transition time of said signal from said first preset threshold to said second preset threshold (S1, S2);
- execute said current milk dispensing cycle with a current value (dt₁ₐ) of said first delay that is modified with respect to said nominal value of said first delay if said current transition time (Δtₓ) differs from said nominal transition time.

2. The coffee machine (1) according to claim 1, **characterized in that** said electronic controller is configured to increase or respectively decrease in the current milk dispensing cycle said current value (dt₁ₐ) of said first delay with respect to the corresponding nominal value if said current transition time is greater or respectively lower than said nominal transition time.

3. The coffee machine (1) according to any preceding claim, **characterized in that** said electronic controller is configured to execute said current dispensing cycle with a current value (dt_{1b}) of a second delay between an instant of deactivation of said pump and said instant of detection of said first level of milk (L1), wherein said current value (dt_{1b}) of said second delay unequivocally derives from said current value (dt₁ₐ) of said first delay.

4. The coffee machine (1) according to any preceding claim, **characterized in that** said optical means for detecting the level of milk present in said jug (6) comprises at least second operative infrared optical means for detecting at least around a second level of milk (L2), where said second level (L2) is lower than said first level (L1).

5. The coffee machine (1) according to the preceding claim, **characterized in that** said electronic controller is configured to execute said current dispensing cycle with a current value (dt₂) of a third delay between the instant of closure of said solenoid valve (30) and the instant (t₂) of detection of said second level (L2) of milk, wherein said current value (dt₂) of said third delay unequivocally derives from said current value (dt₁ₐ) of said first delay.

6. The coffee machine (1) according to any one of claims 4 and 5, **characterized in that** said first optical means comprises a first transmitter IR and a first receiver IR positioned at said first level (L1), and said second optical means comprises a second transmitter IR and a second receiver IR positioned at said second level (L2).

7. The coffee machine (1) according to the preceding claim, **characterized in that** said second optical means is arranged near the bottom of said jug (6).

8. The coffee machine (1) according to any one of claims 6 and 7, **characterized in that** said first and second optical means operates selectively or in combination.

9. The coffee machine (1) according to any preceding claim, **characterized in that** in the execution of said current dispensing cycle said controller overrides the aforesaid control of the current dispensing cycle if said first level (L1) is not detected within a certain interval of time from an instant of opening of said solenoid valve (30).

10. A control method for controlling a current milk dispensing cycle in a coffee machine (1) comprising a machine body, and electronic controller, a water feed pump, a boiler for producing steam from said water, a steam dispenser provided with a shut-off solenoid valve, a dispensing device (4) for dispensing milk emulsified and/or heated with said steam, said device (4) having a jug (6) containing the milk and a lid (7) closing the jug (6) having a Venturi-effect chamber connected to said steam dispenser and to said jug (6) to draw the milk present in said jug (6), optical means for detecting the level of milk present in said jug (6) comprising at least a first operative infrared optical means to acquire a signal at least around a first level of milk in said jug (6), **characterized in that** it comprises the following steps:
- storing a nominal value of a transition time of said signal from a first to a second threshold preset around said first level (L1) and a nominal value of a first delay between an instant of deactivation of said boiler and an instant of detection of said first level of milk (L 1);
- during the execution of a current milk dispensing cycle, acquiring a current value of said transition time (Δtₓ);
- executing said current milk dispensing cycle with a current value (dt₁ₐ) of said first delay that is modified with respect to said nominal value of said first delay if said current transition time (Δtₓ) differs from said nominal transition time.

11. The control method for controlling a current milk dispensing cycle according to the preceding claim **characterized by** executing said current dispensing cycle with a current value (dt_{1b}) of a second delay between an instant of deactivation of said pump and said instant of detection of said first level of milk (L1), wherein said current value (dt_{1b}) of said second delay unequivocally derives from said current value (dt₁ₐ) of said first delay

12. The control method for controlling a current milk dispensing cycle according to the preceding claim, wherein said optical means for detecting the level of milk present in said jug (6) comprises at least a second operative infrared optical means for detecting around a second level of milk (L2) near the bottom of said jug (6), where said second level (L2) is lower than said first level (L1), **characterized in that** it further comprises the following steps:
- performing said current dispensing cycle with a current value (dt₂) of a third delay between the instant of closure of said solenoid valve (30) and the instant (t₂) of detection of said second level (L2) of milk, wherein the current value (dt₂) of said third delay unequivocally derives from said current value (dt₁ₐ) of said first delay.

## Patentansprüche

1. Eine Kaffeemaschine (1), die einen Maschinenkörper (2), eine elektronische Steuerung, eine Wasserzufuhrpumpe, einen Boiler zur Erzeugung von Dampf aus dem Wasser, einen Dampfauslass (10), der mit einem Absperr-Magnetventil (30) ausgestattet ist, sowie eine Ausgabeeinrichtung (4) zur Ausgabe von mit dem Dampf emulgierter und/oder erhitzter Milch umfasst, wobei die Einrichtung (4) einen Krug (6) enthält, der die Milch enthält, und einen Deckel (7), der den Krug (6) verschließt, wobei der Deckel eine Venturi-Effekt-Kammer (9) aufweist, die mit dem Dampfauslass (10) und dem Krug (6) verbunden ist, um die im Krug (6) befindliche Milch anzusaugen. Des Weiteren ist ein optisches Mittel (12) vorgesehen, um den Milchstand (14) im Krug (6) zu erfassen, wobei mindestens ein erstes betriebliches Infrarot-Optikmittel (12a, 12b) vorgesehen ist, um ein Signal mindestens um einen ersten Füllstand (L1) der Milch im Krug (6) herum zu erfassen, **dadurch gekennzeichnet, dass** die Steuerung so konfiguriert ist, dass sie:
- einen Sollwert einer Übergangszeit des Signals von einem ersten Schwellenwert zu einem zweiten Schwellenwert (S1, S2), die um den ersten Füllstand (L1) voreingestellt sind, und einen Sollwert einer ersten Verzögerung zwischen dem Abschaltzeitpunkt des Boilers und dem Erfassungszeitpunkt des ersten Milchfüllstands (L1) speichert;
- während der Durchführung eines aktuellen Milch-Ausgabeverfahrens einen aktuellen Wert (Δtₓ) dieser Übergangszeit des Signals von dem ersten voreingestellten Schwellenwert zu dem zweiten voreingestellten Schwellenwert (S1, S2) erfasst;
- den aktuellen Milch-Ausgabeverfahren mit einem aktuellen Wert (dt₁ₐ) der ersten Verzögerung ausführt, der im Vergleich zum Sollwert der ersten Verzögerung modifiziert wird, falls die aktuelle Übergangszeit (Δtₓ) von der Soll-Übergangszeit abweicht.

2. Die Kaffeemaschine (1) nach Anspruch 1, **dadurch gekennzeichnet, dass** die elektronische Steuerung so konfiguriert ist, dass sie im aktuellen Milchausgabeverfahren den aktuellen Wert (dt₁ₐ) der ersten Verzögerung im Vergleich zum entsprechenden Sollwert erhöht oder verringert, wenn die aktuelle Übergangszeit größer oder kleiner als die Soll-Übergangszeit ist.

3. Die Kaffeemaschine (1) nach einem der vorhergehenden Ansprüche, **dadurch gekennzeichnet, dass** die elektronische Steuerung so konfiguriert ist, dass sie den aktuellen Ausgabeverfahren mit einem aktuellen Wert (dt_{1b}) einer zweiten Verzögerung zwischen dem Abschaltzeitpunkt der Pumpe und dem Zeitpunkt der Erfassung des ersten Milchfüllstands (L1) ausführt, wobei der aktuelle Wert (dt_{1b}) der zweiten Verzögerung eindeutig aus dem aktuellen Wert (dt₁ₐ) der ersten Verzögerung abgeleitet wird.

4. Die Kaffeemaschine (1) nach einem der vorhergehenden Ansprüche, **dadurch gekennzeichnet, dass** das optische Mittel zur Erkennung des Milchstands im Krug (6) mindestens ein zweites betriebliches Infrarot-Optikmittel zur Erkennung mindestens um einen zweiten Milchstand (L2) herum umfasst, wobei der zweite Milchstand (L2) niedriger als der erste Milchstand (L1) ist.

5. Die Kaffeemaschine (1) nach dem vorhergehenden Anspruch, **dadurch gekennzeichnet, dass** die elektronische Steuerung so konfiguriert ist, dass sie den aktuellen Ausgabeverfahren mit einem aktuellen Wert (dt₂) einer dritten Verzögerung zwischen dem Zeitpunkt des Schließens des Magnetventils (30) und dem Zeitpunkt (t₂) der Erkennung des zweiten Milchstands (L2) ausführt, wobei der aktuelle Wert (dt₂) der dritten Verzögerung eindeutig aus dem aktuellen Wert (dt₁ₐ) der ersten Verzögerung abgeleitet wird.

6. Die Kaffeemaschine (1) nach einem der Ansprüche 4 und 5, **dadurch gekennzeichnet, dass** das erste optische Mittel einen ersten IR-Sender und einen ersten IR-Empfänger umfasst, die auf Höhe des ersten Füllstands (L1) positioniert sind, und das zweite optische Mittel einen zweiten IR-Sender und einen zweiten IR-Empfänger umfasst, die auf Höhe des zweiten Füllstands (L2) positioniert sind.

7. Die Kaffeemaschine (1) nach dem vorhergehenden Anspruch, **dadurch gekennzeichnet, dass** das zweite optische Mittel in der Nähe des Bodens des Krugs (6) angeordnet ist.

8. Die Kaffeemaschine (1) nach einem der Ansprüche 6 und 7, **dadurch gekennzeichnet, dass** das erste und das zweite optische Mittel wahlweise einzeln oder in Kombination betrieben werden.

9. Die Kaffeemaschine (1) nach einem der vorhergehenden Ansprüche, **dadurch gekennzeichnet, dass** die Steuerung bei der Ausführung des aktuellen Ausgabeverfahrens die genannte Steuerung des aktuellen Ausgabeverfahrens außer Kraft setzt, wenn der erste Füllstand (L1) nicht innerhalb eines bestimmten Zeitintervalls ab dem Öffnungszeitpunkt des Magnetventils (30) erkannt wird.

10. Ein Steuerungsverfahren zur Regelung eines aktuellen Milchausgabeverfahrens in einer Kaffeemaschine (1), die einen Maschinenkörper, eine elektronische Steuerung, eine Wasserzufuhrpumpe, einen Boiler zur Dampferzeugung aus dem Wasser, einen Dampfauslass mit einem Absperr-Magnetventil und eine Ausgabeeinrichtung (4) zur Ausgabe von mit dem Dampf emulgierter und/oder erhitzter Milch umfasst. Die Ausgabeeinrichtung (4) hat einen Krug (6), der die Milch enthält, sowie einen Deckel (7), der den Krug (6) verschließt, wobei der Deckel eine Venturi-Effekt-Kammer aufweist, die mit dem Dampfauslass und dem Krug (6) verbunden ist, um die Milch aus dem Krug (6) anzusaugen. Ein optisches Mittel zur Erkennung des Milchstands im Krug (6) umfasst mindestens ein erstes betriebliches Infrarot-Optikmittel, das ein Signal mindestens um einen ersten Milchstand im Krug (6) herum erfasst, **dadurch gekennzeichnet, dass** es die folgenden Schritte umfasst:
- Speichern eines Sollwerts einer Übergangszeit des Signals von einem ersten auf einen zweiten voreingestellten Schwellenwert um den ersten Füllstand (L1) und eines Sollwerts einer ersten Verzögerung zwischen dem Zeitpunkt der Abschaltung des Boilers und dem Zeitpunkt der Erkennung des ersten Milchstands (L1);
- Erfassen eines aktuellen Werts der Übergangszeit (Δtₓ) während der Durchführung eines aktuellen Milchausgabeverfahrens;
- Ausführen des aktuellen Milchausgabeverfahrens mit einem aktuellen Wert (dt₁ₐ) der ersten Verzögerung, der im Vergleich zum Sollwert der ersten Verzögerung modifiziert wird, wenn die aktuelle Übergangszeit (Δtₓ) von der Soll-Übergangszeit abweicht.

11. Das Steuerungsverfahren zur Regelung eines aktuellen Milchausgabeverfahrens nach dem vorhergehenden Anspruch, **dadurch gekennzeichnet, dass** das aktuelle Ausgabeverfahren mit einem aktuellen Wert (dt_{1b}) einer zweiten Verzögerung zwischen dem Abschaltzeitpunkt der Pumpe und dem Zeitpunkt der Erkennung des ersten Milchstands (L1) ausgeführt wird, wobei der aktuelle Wert (dt_{1b}) der zweiten Verzögerung eindeutig aus dem aktuellen Wert (dt₁ₐ) der ersten Verzögerung abgeleitet wird.

12. Das Steuerungsverfahren zur Regelung eines aktuellen Milchausgabeverfahrens nach dem vorhergehenden Anspruch, wobei das optische Mittel zur Erkennung des Milchstands im Krug (6) mindestens ein zweites betriebliches Infrarot-Optikmittel zur Erkennung um einen zweiten Milchstand (L2) in der Nähe des Bodens des Krugs (6) umfasst, wobei der zweite Milchstand (L2) niedriger als der erste Milchstand (L1) ist, **dadurch gekennzeichnet, dass** es weiterhin die folgenden Schritte umfasst:
- Ausführen des aktuellen Ausgabeverfahrens mit einem aktuellen Wert (dt₂) einer dritten Verzögerung zwischen dem Zeitpunkt des Schließens des Magnetventils (30) und dem Zeitpunkt (t₂) der Erkennung des zweiten Milchstands (L2), wobei der aktuelle Wert (dt₂) der dritten Verzögerung eindeutig aus dem aktuellen Wert (dt₁ₐ) der ersten Verzögerung abgeleitet wird.

## Revendications

1. Une machine à café (1) comprenant un corps de machine (2), un contrôleur électronique, une pompe d'alimentation en eau, une chaudière pour produire de la vapeur à partir de ladite eau, un distributeur de vapeur (10) équipé d'une électrovanne d'arrêt (30), un dispositif de distribution (4) pour distribuer du lait émulsifié et/ou chauffé avec ladite vapeur, ledit dispositif (4) ayant un récipient (6) contenant le lait et un couvercle (7) fermant le récipient (6) avec une chambre à effet Venturi (9) connectée audit distributeur de vapeur (10) et audit récipient (6) pour aspirer le lait présent dans ledit récipient (6), un moyen optique (12) étant en outre prévu pour détecter le niveau de lait (14) présent dans ledit récipient (6), comprenant au moins un premier moyen optique infrarouge opérationnel (12a, 12b) pour acquérir un signal au moins autour d'un premier niveau (L1) de lait dans ledit récipient (6), **caractérisé en ce que** ledit contrôleur est configuré pour :
- stocker une valeur nominale d'un temps de transition dudit signal entre un premier seuil et un second seuil (S 1, S2) prédéfinis autour dudit premier niveau (L1), et une valeur nominale d'un premier délai entre un instant de désactivation de ladite chaudière et un instant de détection dudit premier niveau de lait (L1);
- pendant l'exécution d'un cycle actuel de distribution de lait, acquérir une valeur actuelle (Δtₓ) dudit temps de transition dudit signal entre ledit premier seuil prédéfini et ledit second seuil prédéfini (S1, S2);
- exécuter ledit cycle actuel de distribution de lait avec une valeur actuelle (dt₁ₐ) dudit premier délai, modifiée par rapport à ladite valeur nominale dudit premier délai, si ledit temps de transition actuel (Δtₓ) diffère dudit temps de transition nominal.

2. La machine à café (1) selon la revendication 1, **caractérisée en ce que** ledit contrôleur électronique est configuré pour augmenter ou, respectivement, diminuer, pendant le cycle actuel de distribution de lait, ladite valeur actuelle (dt₁ₐ) dudit premier délai par rapport à la valeur nominale correspondante si ledit temps de transition actuel est supérieur ou, respectivement, inférieur audit temps de transition nominal.

3. La machine à café (1) selon l'une des revendications précédentes, **caractérisée en ce que** ledit contrôleur électronique est configuré pour exécuter ledit cycle actuel de distribution avec une valeur actuelle (dt_{1b}) d'un second délai entre un instant de désactivation de ladite pompe et ledit instant de détection dudit premier niveau de lait (L1), ladite valeur actuelle (dt_{1b}) dudit second délai dérivant de manière non équivoque de ladite valeur actuelle (dt₁ₐ) dudit premier délai.

4. La machine à café (1) selon l'une des revendications précédentes, **caractérisée en ce que** ledit moyen optique de détection du niveau de lait présent dans ledit récipient (6) comprend au moins un second moyen optique infrarouge opérationnel pour détecter au moins autour d'un second niveau de lait (L2), où ledit second niveau (L2) est inférieur audit premier niveau (L1).

5. La machine à café (1) selon la revendication précédente, **caractérisée en ce que** ledit contrôleur électronique est configuré pour exécuter ledit cycle actuel de distribution avec une valeur actuelle (dt₂) d'un troisième délai entre l'instant de fermeture de ladite électrovanne (30) et l'instant (t₂) de détection dudit second niveau (L2) de lait, ladite valeur actuelle (dt₂) dudit troisième délai dérivant de manière non équivoque de ladite valeur actuelle (dt₁ₐ) dudit premier délai.

6. La machine à café (1) selon l'une des revendications 4 et 5, **caractérisée en ce que** ledit premier moyen optique comprend un premier émetteur IR et un premier récepteur IR positionnés audit premier niveau (L1), et ledit second moyen optique comprend un second émetteur IR et un second récepteur IR positionnés audit second niveau (L2).

7. La machine à café (1) selon la revendication précédente, **caractérisée en ce que** ledit second moyen optique est disposé près du fond dudit récipient (6).

8. La machine à café (1) selon l'une des revendications 6 et 7, **caractérisée en ce que** lesdits premier et second moyens optiques fonctionnent de manière sélective ou en combinaison.

9. La machine à café (1) selon l'une des revendications précédentes, **caractérisée en ce que** lors de l'exécution dudit cycle actuel de distribution, ledit contrôleur désactive ledit contrôle du cycle actuel de distribution si ledit premier niveau (L1) n'est pas détecté dans un certain intervalle de temps à partir de l'instant d'ouverture de ladite électrovanne (30).

10. Un procédé de contrôle pour contrôler un cycle actuel de distribution de lait dans une machine à café (1) comprenant un corps de machine, un contrôleur électronique, une pompe d'alimentation en eau, une chaudière pour produire de la vapeur à partir de ladite eau, un distributeur de vapeur équipé d'une électrovanne d'arrêt, un dispositif de distribution (4) pour distribuer du lait émulsifié et/ou chauffé avec ladite vapeur, ledit dispositif (4) ayant un récipient (6) contenant le lait et un couvercle (7) fermant le récipient (6) avec une chambre à effet Venturi connectée audit distributeur de vapeur et audit récipient (6) pour aspirer le lait présent dans ledit récipient (6), des moyens optiques pour détecter le niveau de lait présent dans ledit récipient (6) comprenant au moins un premier moyen optique infrarouge opérationnel pour acquérir un signal au moins autour d'un premier niveau de lait dans ledit récipient (6), **caractérisé en ce qu'**il comprend les étapes suivantes :
- stockage d'une valeur nominale d'un temps de transition dudit signal entre un premier et un second seuil prédéfinis autour dudit premier niveau (L1) et d'une valeur nominale d'un premier délai entre un instant de désactivation de ladite chaudière et un instant de détection dudit premier niveau de lait (L1);
- pendant l'exécution d'un cycle actuel de distribution de lait, acquisition d'une valeur actuelle dudit temps de transition (Δtₓ);
- exécution dudit cycle actuel de distribution de lait avec une valeur actuelle (dt₁ₐ) dudit premier délai, modifiée par rapport à ladite valeur nominale dudit premier délai si ledit temps de transition actuel (Δtₓ) diffère dudit temps de transition nominal.

11. Le procédé de contrôle pour contrôler un cycle actuel de distribution de lait selon la revendication précédente, **caractérisé par** l'exécution dudit cycle actuel de distribution avec une valeur actuelle (dt_{1b}) d'un second délai entre un instant de désactivation de ladite pompe et ledit instant de détection dudit premier niveau de lait (L1), ladite valeur actuelle (dt_{1b}) dudit second délai dérivant de manière non équivoque de ladite valeur actuelle (dt₁ₐ) dudit premier délai.

12. Le procédé de contrôle pour contrôler un cycle actuel de distribution de lait selon la revendication précédente, dans lequel lesdits moyens optiques pour détecter le niveau de lait présent dans ledit récipient (6) comprennent au moins un second moyen optique infrarouge opérationnel pour détecter autour d'un second niveau de lait (L2) près du fond dudit récipient (6), où ledit second niveau (L2) est inférieur audit premier niveau (L1), **caractérisé en ce qu'**il comprend en outre les étapes suivantes :
- effectuer ledit cycle actuel de distribution avec une valeur actuelle (dt₂) d'un troisième délai entre l'instant de fermeture de ladite électrovanne (30) et l'instant (t₂) de détection dudit second niveau (L2) de lait, ladite valeur actuelle (dt₂) dudit troisième délai dérivant de manière non équivoque de ladite valeur actuelle (dt₁ₐ) dudit premier délai.
